# EUROPEAN PATENT APPLICATION

(11) **EP 4 745 448 A1**
(43) Date of publication of application: **20.05.2026**
(21) Application number: 23945136.2
(22) Date of filing: 12.07.2023
(51) Int. Cl.: F17C 5/06, F17C 13/00, B60S 5/02

(54) **FUEL GAS FILLING DEVICE**

(71) Applicant: HONDA MOTOR CO., LTD., Tokyo 105-8404 (JP); Tokico System Solutions, Ltd., Yokohama-shi, Kanagawa 230-0051 (JP); ENEOS CORPORATION, Chiyoda-ku Tokyo 100-8162 (JP)
(72) Inventor: HANDA Kiyoshi, Wako-shi, Saitama 351-0193 (JP); YAMAGUCHI Shigehiro, Wako-shi, Saitama 351-0193 (JP); REMBUTSU Tatsuya, Kakegawa-shi, Shizuoka 436-0082 (JP); MAEHARA Kazumi, Tokyo 100-8162 (JP)
(74) Representative: Weickmann & Weickmann PartmbB
(86) International application number: PCT/JP2023/025786
(87) International publication number: WO 2025/013263

(57) **Abstract**

This fuel gas filling device (14) comprises: a filling unit (48) for filling a gas tank (50) of a moving body (16) with a fuel gas; a tank information acquisition unit (140) for acquiring tank information pertaining to the remaining amount of gas in the gas tank before filling the gas tank with the fuel gas by the filling unit is started; a temperature adjustment unit (30) for adjusting the gas temperature (Td) of the fuel gas to fill the gas tank so as to approach an adjustment target temperature (Tc); and a determination unit (152) for determining the adjustment target temperature in accordance with the tank information acquired by the tank information acquisition unit.

## Description

### TECHNICAL FIELD

The present invention relates to a fuel gas filling device.

### BACKGROUND ART

In recent years, research and development have been conducted on fuel cells that contribute to energy efficiency in order to ensure that more people have access to affordable, reliable, sustainable and modern energy.

JP 2011-001991 A discloses a hydrogen filling system. In the hydrogen filling system, in the case where the distance between the vehicle and the hydrogen station is equal to or less than a predetermined distance, cooling of the hydrogen tank by the refrigerant is started.

### SUMMARY OF THE INVENTION

When a moving object is connected to a fuel gas filling device, the gas tank of the moving object is filled with a fuel gas by the fuel gas filling device. In the case where a large temperature difference occurs in the temperature distribution in the gas tank, a safety device may be activated and the filling of the fuel gas may be stopped. There has been a demand for suppressing temperature separation of the fuel gas in the gas tank during filling of the fuel gas.

The present invention has the object of solving the aforementioned problem.

An aspect of the present invention is characterized by a fuel gas filling device comprising: a filling unit configured to fill a gas tank of a moving object with a fuel gas; a tank information acquisition unit configured to acquire tank information relating to a remaining gas amount in the gas tank before the filling unit starts filling the gas tank with the fuel gas; a temperature adjustment unit configured to adjust a gas temperature of the fuel gas that fills the gas tank, in a manner so that the gas temperature approaches an adjustment target temperature; and a determination unit configured to determine the adjustment target temperature according to the tank information acquired by the tank information acquisition unit.

According to the present invention, temperature separation of the fuel gas in the gas tank during filling of the fuel gas can be suppressed.

### BRIEF DESCRIPTION OF DRAWINGS

[FIG. 1] FIG. 1 is a diagram illustrating a state in which a moving object is connected to a fuel gas filling device;
[FIG. 2] FIG. 2 is a diagram illustrating a temperature distribution in a gas tank;
[FIG. 3] FIG. 3 is a schematic diagram showing a configuration of a control ECU;
[FIG. 4] FIG. 4 is a diagram illustrating a map of a pressure rise rate;
[FIG. 5] FIG. 5 is a diagram illustrating a delay time in temperature adjustment of a fuel gas and changes in gas temperature and tank internal pressure; and
[FIG. 6] FIG. 6 is a flowchart showing a processing procedure according to a fuel gas filling method.

### DETAILED DESCRIPTION OF THE INVENTION

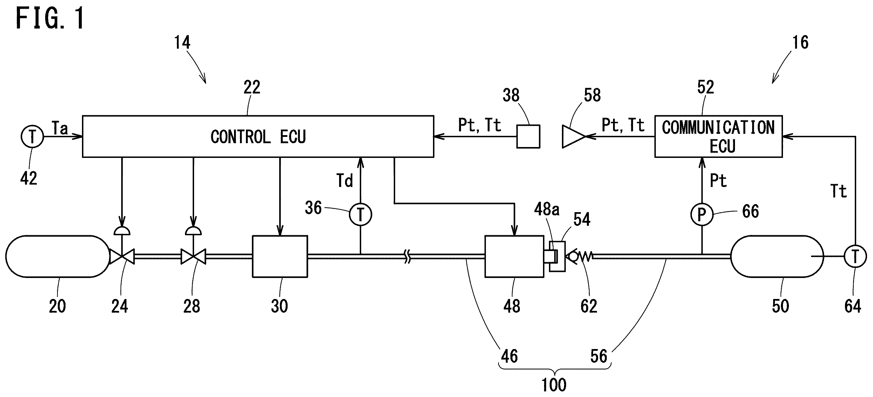

A fuel gas filling device according to an embodiment will be described with reference to the drawings. FIG. 1 is a diagram illustrating a state in which a moving object 16 is connected to a fuel gas filling device 14. A fuel gas is supplied from the fuel gas filling device 14 according to the present embodiment to the moving object 16. The moving object 16 is, for example, a vehicle, a flying object, a ship, a robot, or the like.

The fuel gas filling device 14 includes an accumulator 20, a control ECU (Electronic Control Unit) 22, a shut-off valve 24, a flow rate adjusting valve 28, and a temperature adjustment unit 30. The fuel gas filling device 14 further includes a gas temperature sensor 36, a communication device 38, an ambient temperature sensor 42, a delivery pipe 46, and a filling unit 48.

The moving object 16 includes a gas tank 50, a communication ECU 52, a receptacle 54, an introduction pipe 56, a communication device 58, a tank internal temperature sensor 64, and a tank information sensor (a tank internal pressure sensor) 66. The delivery pipe 46 of the fuel gas filling device 14 and the introduction pipe 56 of the moving object 16 form a pipe 100 through which the fuel gas flows from the accumulator 20 to the gas tank 50. The fuel gas is, for example, hydrogen gas or natural gas (mainly hydrocarbon gas).

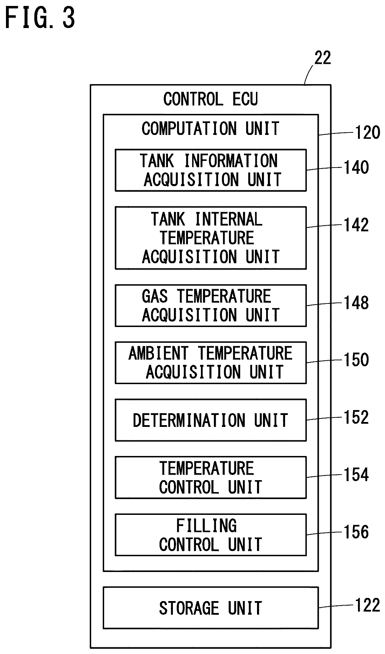

The accumulator 20 of the fuel gas filling device 14 stores a high-pressure fuel gas. The filling unit 48 fills the gas tank 50 of the moving object 16 with the fuel gas in the accumulator 20 via the pipe 100. The control ECU 22 controls the temperature of the fuel gas filled into the gas tank 50 from the accumulator 20, and the filling of the fuel gas. The configuration of the control ECU 22 will be described later with reference to FIG. 3.

The shut-off valve 24 is provided in the accumulator 20. When the control ECU 22 controls the shut-off valve 24 to open the shut-off valve 24, the fuel gas is delivered from the accumulator 20 to the pipe 100. When the control ECU 22 controls the shut-off valve 24 to close the shut-off valve 24, the delivery of the fuel gas from the accumulator 20 to the pipe 100 is stopped. Note that the shut-off valve 24 may not be provided in the accumulator 20. That is, the shut-off valve 24 may be provided in the delivery pipe 46 between the accumulator 20 and the flow rate adjusting valve 28.

The flow rate adjusting valve 28 is provided in the delivery pipe 46. The flow rate adjusting valve 28 adjusts the gas flow rate of the fuel gas that is delivered from the accumulator 20 and flows through the pipe 100. The control ECU 22 controls the flow rate adjusting valve 28 to adjust the opening degree of the flow rate adjusting valve 28. As a result, the gas flow rate can be continuously adjusted.

The temperature adjustment unit 30 cools the fuel gas flowing through the pipe 100 before the gas tank 50 of the moving object 16 is filled with the fuel gas. The temperature adjustment unit 30 is provided in the delivery pipe 46 between the flow rate adjusting valve 28 and the filling unit 48. The temperature adjustment unit 30 includes a refrigerator, a heat exchanger, and a refrigerant (none of which is shown). Heat is exchanged between the refrigerant cooled by the refrigerator and the fuel gas flowing through the delivery pipe 46 by the heat exchanger, whereby the fuel gas is cooled. Note that the cooling performed by the temperature adjustment unit 30 is not limited to cooling by the refrigerant. For example, the fuel gas delivered from the accumulator 20 may be mixed with a fuel gas cooled in advance.

As will be described later, the control ECU 22 controls the temperature adjustment unit 30 to adjust a gas temperature Td of the fuel gas that fills the gas tank 50 so that the gas temperature Td approaches an adjustment target temperature Tc. Specifically, the control ECU 22 controls the temperature adjustment unit 30, whereby a set temperature Tx of the refrigerator of the temperature adjustment unit 30 is set to a temperature corresponding to the adjustment target temperature Tc.

The gas temperature sensor 36 is provided in the delivery pipe 46 and detects the gas temperature Td of the fuel gas that fills the gas tank 50 of the moving object 16. Specifically, the gas temperature sensor 36 is provided between the temperature adjustment unit 30 and the filling unit 48, and detects the gas temperature Td adjusted by the temperature adjustment unit 30. The gas temperature Td is acquired by the control ECU 22. The ambient temperature sensor 42 detects an ambient temperature Ta outside the fuel gas filling device 14 and the moving object 16. Information about the ambient temperature Ta is acquired by the control ECU 22.

The delivery pipe 46 extends from the accumulator 20 to the filling unit 48. The fuel gas delivered from the accumulator 20 to the delivery pipe 46 flows through the delivery pipe 46. A nozzle 48a of the filling unit 48 of the fuel gas filling device 14 can be fitted into the receptacle 54 of the moving object 16. The nozzle 48a and the receptacle 54 are connected to each other by fitting the nozzle 48a into the receptacle 54. As a result, the delivery pipe 46 of the fuel gas filling device 14 and the introduction pipe 56 of the moving object 16 communicate with each other.

The fuel gas that has flowed through the delivery pipe 46 flows into the introduction pipe 56 via the nozzle 48a and the receptacle 54 that are connected to each other. The introduction pipe 56 extends from the receptacle 54 to the gas tank 50. The fuel gas flowing into the introduction pipe 56 is filled into the gas tank 50. In the example shown in FIG. 1, a check valve 62 for preventing the fuel gas from flowing back from the gas tank 50 toward the receptacle 54 is provided downstream of the receptacle 54.

The communication device 38 of the fuel gas filling device 14 and the communication device 58 of the moving object 16 perform wireless communication using infrared rays or the like. The communication device 38 is integrally attached to the nozzle 48a. When the nozzle 48a and the receptacle 54 are connected to each other, wireless communication is enabled between the communication device 38 and the communication device 58. Information about a tank internal temperature Tt, information about a tank internal pressure Pt, and the like, which will be described later, are transmitted and received by wireless communication.

The gas tank 50 of the moving object 16 stores the fuel gas filled therein from the fuel gas filling device 14 via the pipe 100. The moving object 16 includes a fuel cell (not shown). The fuel gas supplied from the gas tank 50 and air react with each other in the fuel cell. As a result of this reaction, electric power serving as a power source of the moving object 16 can be obtained.

The tank internal temperature sensor 64 is provided in the gas tank 50 and detects the tank internal temperature Tt in the gas tank 50. Information about the detected tank internal temperature Tt is acquired by the communication ECU 52. The tank information sensor 66 is provided in the introduction pipe 56 or the gas tank 50, and acquires tank information relating to a remaining gas amount in the gas tank 50. The tank information relating to the detected remaining gas amount is acquired by the communication ECU 52.

In the present embodiment, the tank information sensor 66 is a tank internal pressure sensor that detects the tank internal pressure Pt in the gas tank 50. That is, the above-described tank information is information about the tank internal pressure Pt. Accordingly, the information about the detected tank internal pressure Pt is acquired by the communication ECU 52. The tank internal pressure Pt increases as the remaining amount of the fuel gas in the gas tank 50 increases, and the tank internal pressure Pt decreases as the remaining gas amount decreases. By acquiring the information about the tank internal pressure Pt, the remaining gas amount in the gas tank 50 can be easily detected.

The communication ECU 52 acquires the information about the tank internal temperature Tt from the tank internal temperature sensor 64, and acquires the information about the tank internal pressure Pt from the tank information sensor 66. The communication ECU 52 controls the communication device 58 to transmit the information about the tank internal temperature Tt and the information about the tank internal pressure Pt, which have been acquired, to the communication device 38. The control ECU 22 of the fuel gas filling device 14 controls the communication device 38 to acquire the information about the tank internal temperature Tt and the information about the tank internal pressure Pt that have been received by the communication device 38.

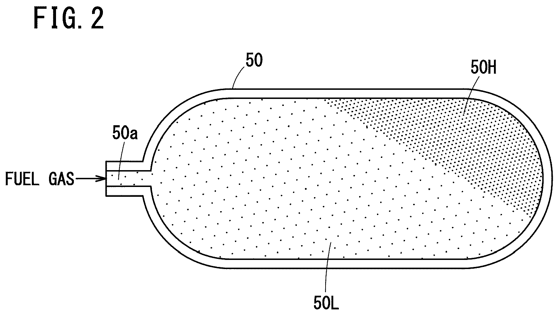

FIG. 2 is a diagram illustrating a temperature distribution in the gas tank 50. A large temperature difference may occur in the temperature distribution in the gas tank 50. In the example shown in FIG. 2, the fuel gas in the gas tank 50 is separated into a low-temperature portion 50L and a high-temperature portion 50H. The temperature difference in the gas tank 50 may cause a significant temperature separation of the fuel gas in the gas tank 50.

The fuel gas that fills the gas tank 50 flows from the pipe 100 into a connecting portion 50a between the gas tank 50 and the pipe 100, and is ejected from the connecting portion 50a into the gas tank 50. The fuel gas stored in the gas tank 50 can be stirred by the fuel gas being ejected into the gas tank 50. By the stirring action of the fuel gas, the temperature separation of the fuel gas in the gas tank 50 can be eliminated. That is, the temperature distribution of the fuel gas in the gas tank 50 can be uniform.

As the fuel gas fills the gas tank 50, the tank internal pressure Pt and the tank internal temperature Tt in the gas tank 50 increase. In particular, in the case where the remaining gas amount in the gas tank 50 is small, the tank internal temperature Tt may exceed a temperature threshold Th during filling of the fuel gas. In the case where the tank internal temperature Tt exceeds the temperature threshold Th, a safety device (not shown) can be activated, and the filling of the fuel gas can be stopped. The temperature threshold Th is, for example, 85 degrees Celsius.

In order to perform control so that the tank internal temperature Tt does not exceed the temperature threshold Th during filling of the fuel gas, the following two control processes are conceivable. The first control process is a control process for lowering a pressure rise rate Prr per unit time of the tank internal pressure Pt due to filling of the fuel gas as the remaining gas amount in the gas tank 50 decreases. The second control process is a control process for lowering the gas temperature Td of the fuel gas to be filled as the remaining gas amount in the gas tank 50 decreases.

Note that a map in which the pressure rise rate Prr is determined in advance according to the gas temperature Td of the fuel gas to be filled is set in the fuel gas filling device 14. The pressure rise rate Prr is determined in advance by an experiment or the like so that the tank internal temperature Tt does not exceed the temperature threshold Th. As described above, when the tank internal pressure Pt increases, the tank internal temperature Tt also increases.

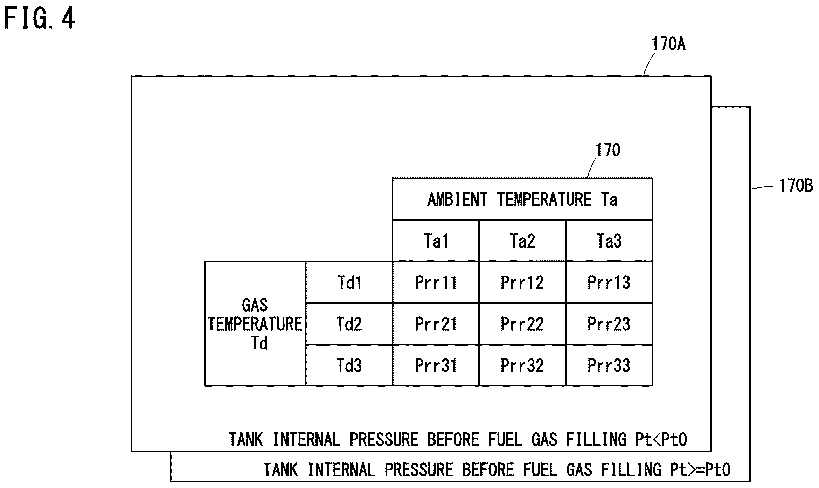

Therefore, the map is set so that the pressure rise rate Prr increases as the gas temperature Td that can influence the tank internal temperature Tt decreases. Note that, since the tank internal temperature Tt is also influenced by the ambient temperature Ta, the map is set so that the pressure rise rate Prr increases also as the ambient temperature Ta decreases. The map will be described in detail later with reference to FIG. 4.

In the first control process described above, the pressure rise rate Prr of the tank internal pressure Pt decreases as the remaining gas amount in the gas tank 50 decreases. This reduces the volumetric flow rate of the fuel gas that is ejected from the connecting portion 50a into the gas tank 50. In this case, the above-described stirring action of the fuel gas in the gas tank 50 is weakened. Therefore, the above-described temperature difference may occur in the gas tank 50, and the fuel gas in the gas tank 50 may be separated into the low-temperature portion 50L and the high-temperature portion 50H. In the case where the temperature of the high-temperature portion 50H of the fuel gas is detected as the tank internal temperature Tt in the gas tank 50, a possibility is conceivable that the tank internal temperature Tt exceeds the temperature threshold Th.

Note that, when the fuel gas is filled, as the pressure rise rate Prr of the tank internal pressure Pt increases, the tank internal temperature Tt may exceed the temperature threshold Th due to the heat generation of the fuel gas. Therefore, as described above, the pressure rise rate Prr is preferably low. However, as the pressure rise rate Prr decreases, the stirring action of the fuel gas is weakened as described above. In particular, in the case where the remaining amount of the fuel gas in the gas tank 50 is small, the temperature difference in the gas tank 50 is likely to occur in the process of continuously filling the gas tank 50 with the fuel gas without stirring the fuel gas. Conversely, in the case where the remaining gas amount is large, the filling of the fuel gas is completed before the tank internal temperature Tt increases, and therefore, the temperature difference in the gas tank 50 is less likely to occur.

Further, in the case where the ambient temperature Ta is high, the temperature of the gas tank 50 becomes high. Therefore, the temperature of a part of the fuel gas in the gas tank 50 is increased by the gas tank 50 having a high temperature, and the fuel gas in the gas tank 50 is easily separated into the low-temperature portion 50L and the high-temperature portion 50H. That is, the temperature difference in the gas tank 50 is likely to occur.

In the second control process described above, by the change of the gas temperature Td of the fuel gas to be filled, the pressure rise rate Prr of the tank internal pressure Pt changes based on the map described above. The gas temperature Td decreases and the pressure rise rate Prr increases, whereby the volumetric flow rate of the fuel gas that is ejected from the connecting portion 50a into the gas tank 50 increases. In this case, the above-described stirring action of the fuel gas in the gas tank 50 is enhanced, and therefore, the temperature separation of the fuel gas in the gas tank 50 can be suppressed.

This prevents the temperature of the high-temperature portion 50H of the fuel gas from being detected as the tank internal temperature Tt in the gas tank 50. Therefore, the tank internal temperature Tt can be prevented from exceeding the temperature threshold Th. Accordingly, in the present embodiment, the second control process is used to suppress the occurrence of temperature separation of the fuel gas in the gas tank 50, particularly in the case where the remaining gas amount in the gas tank 50 is small. Further, the pressure rise rate Prr set in the map is determined in advance by an experiment or the like so as to suppress the occurrence of the temperature separation.

FIG. 3 is a schematic diagram showing a configuration of the control ECU 22. The control ECU 22 includes a computation unit 120 and a storage unit 122. The computation unit 120 includes a processor such as a CPU (Central Processing Unit) or a GPU (Graphics Processing Unit). That is, the computation unit 120 includes processing circuitry.

The storage unit 122 includes a volatile memory such as a RAM (Random Access Memory), and a non-volatile memory such as a ROM (Read Only Memory) or a flash memory. The volatile memory is used as a working memory of the processor. The non-volatile memory stores a program executed by the processor, and other necessary data such as the above-described map.

The computation unit 120 includes a tank information acquisition unit 140, a tank internal temperature acquisition unit 142, a gas temperature acquisition unit 148, an ambient temperature acquisition unit 150, a determination unit 152, a temperature control unit 154, and a filling control unit 156. The tank information acquisition unit 140, the tank internal temperature acquisition unit 142, the gas temperature acquisition unit 148, the ambient temperature acquisition unit 150, the determination unit 152, the temperature control unit 154, and the filling control unit 156 are realized by the computation unit 120 executing a program stored in the storage unit 122.

At least part of the tank information acquisition unit 140, the tank internal temperature acquisition unit 142, the gas temperature acquisition unit 148, the ambient temperature acquisition unit 150, the determination unit 152, the temperature control unit 154, and the filling control unit 156 may be realized by an integrated circuit such as an ASIC (Application Specific Integrated Circuit) or an FPGA (Field Programmable Gate Array), or an electronic circuit including a discrete device.

The tank information acquisition unit 140 acquires, from the communication device 38 of the fuel gas filling device 14, information about the tank internal pressure Pt received by the communication device 38 from the communication device 58 of the moving object 16, the information being acquired as the tank information relating to the remaining gas amount in the gas tank 50. The tank internal temperature acquisition unit 142 acquires, from the communication device 38 of the fuel gas filling device 14, information about the tank internal temperature Tt received by the communication device 38 from the communication device 58 of the moving object 16. In the case where the tank internal temperature Tt acquired by the tank internal temperature acquisition unit 142 exceeds the temperature threshold Th, a safety device (not shown) is activated, and the filling of the fuel gas is stopped.

The gas temperature acquisition unit 148 acquires, from the gas temperature sensor 36, the gas temperature Td of the fuel gas that fills the gas tank 50 of the moving object 16, the gas temperature Td having been adjusted by the temperature adjustment unit 30. The ambient temperature acquisition unit 150 acquires the outside ambient temperature Ta from the ambient temperature sensor 42.

The determination unit 152 determines the above-described map according to the information about the tank internal pressure Pt, which is the tank information acquired by the tank information acquisition unit 140. It should be noted that a plurality of maps are stored in advance in the storage unit 122 according to the remaining gas amount in the gas tank 50 obtained before the filling of the fuel gas is started. The determination unit 152 selects one map according to the information about the tank internal pressure Pt indicating the remaining gas amount. Each map is associated with the above-described adjustment target temperature Tc used by the temperature adjustment unit 30. The determination unit 152 determines the adjustment target temperature Tc according to the selected map.

The temperature control unit 154 controls the temperature adjustment unit 30 to adjust the gas temperature Td of the fuel gas that fills the gas tank 50 so that the gas temperature Td approaches the adjustment target temperature Tc. The temperature control unit 154 controls the temperature adjustment unit 30 to set the set temperature Tx of the refrigerator of the temperature adjustment unit 30 to a temperature corresponding to the adjustment target temperature Tc, thereby adjusting the gas temperature Td.

The filling control unit 156 controls filling of the gas tank 50 with the fuel gas based on the map selected by the determination unit 152. The filling control unit 156 opens the shut-off valve 24 to deliver the fuel gas from the accumulator 20 to the pipe 100. The filling control unit 156 determines the opening degree of the flow rate adjusting valve 28 based on the gas temperature Td of the fuel gas and the selected map.

The filling control unit 156 changes the gas flow rate of the fuel gas by adjusting the opening degree of the flow rate adjusting valve 28 to the determined opening degree. The fuel gas flows through the pipe 100 at a gas flow rate corresponding to the opening degree of the flow rate adjusting valve 28. In this manner, the gas tank 50 can be easily filled with the fuel gas.

The filling control unit 156 controls the filling unit 48 to allow the filling unit 48 to fill the gas tank 50 of the moving object 16 with the fuel gas. The filling unit 48 starts filling the gas tank 50 with the fuel gas.

While the gas tank 50 is being filled with the fuel gas, the gas temperature Td of the fuel gas is changed by the temperature adjustment unit 30 so as to approach the adjustment target temperature Tc. According to the map, the pressure rise rate Prr of the tank internal pressure Pt in the gas tank 50 changes according to the gas temperature Td. The filling control unit 156 changes the opening degree of the flow rate adjusting valve 28 according to the change in the gas temperature Td. As a result, the gas flow rate of the fuel gas that fills the gas tank 50 can be easily changed according to the change in the gas temperature Td. In this manner, the filling control unit 156 changes the pressure rise rate Prr of the tank internal pressure Pt according to the gas temperature Td.

FIG. 4 is a diagram illustrating a map 170 of the pressure rise rate Prr. In the map 170, the pressure rise rate Prr is determined according to the ambient temperature Ta and the gas temperature Td of the fuel gas to be filled. In the example shown in FIG. 4, the ambient temperature Ta is classified into a case where it is included in a predetermined range Ta1, a case where it is included in a predetermined range Ta2 higher than the predetermined range Ta1, and a case where it is included in a predetermined range Ta3 higher than the predetermined range Ta2. The ambient temperature Ta is classified into three predetermined ranges, but may be classified into a plurality of (other than three) predetermined ranges.

Further, the gas temperature Td is classified into a case where it is included in a predetermined range Td1, a case where it is included in a predetermined range Td2 higher than the predetermined range Td1, and a case where it is included in a predetermined range Td3 higher than the predetermined range Td2. The gas temperature Td is classified into three predetermined ranges, but may be classified into a plurality of (other than three) predetermined ranges.

In the example shown in FIG. 4, in the case where the ambient temperature Ta is included in the predetermined range Ta1 and the gas temperature Td is included in the predetermined range Td1, the value of the pressure rise rate Prr is set to Prr11. In the case where the ambient temperature Ta is included in the predetermined range Ta2 or Ta3 and the gas temperature Td is included in the predetermined range Td1, the value of the pressure rise rate Prr is set to Prr12 or Prr13, respectively.

In the case where the ambient temperature Ta is included in the predetermined range Ta1, Ta2, or Ta3 and the gas temperature Td is included in the predetermined range Td2, the value of the pressure rise rate Prr is set to Prr21, Prr22, or Prr23, respectively. In the case where the ambient temperature Ta is included in the predetermined range Ta1, Ta2, or Ta3 and the gas temperature Td is included in the predetermined range Td3, the value of the pressure rise rate Prr is set to Prr31, Prr32, or Prr33, respectively. The pressure rise rate Prr increases as the ambient temperature Ta decreases. The pressure rise rate Prr decreases as the ambient temperature Ta increases. The pressure rise rate Prr increases as the gas temperature Td decreases. The pressure rise rate Prr decreases as the gas temperature Td increases.

As described above, a plurality of the maps 170 are stored in advance in the storage unit 122 according to the remaining gas amount in the gas tank 50 obtained before the filling of the fuel gas is started. In the present embodiment, the information about the tank internal pressure Pt in the gas tank 50 is used as the tank information relating to the remaining gas amount in the gas tank 50. Therefore, as shown in FIG. 4, the plurality of maps 170 are stored in advance in the storage unit 122 according to the tank internal pressure Pt obtained before the gas tank 50 is filled with the fuel gas.

In FIG. 4, two maps 170A and 170B are shown as an example. The map 170A is used in the case where the tank internal pressure Pt before the filling of the fuel gas is less than a predetermined value Pt0. Note that the predetermined value Pt0 is, for example, 15 [MPa]. The map 170B is used in the case where the tank internal pressure Pt before the filling of the fuel gas is equal to or higher than the predetermined value Pt0.

Therefore, in the case where the remaining gas amount in the gas tank 50 before the filling of the fuel gas is small, the map 170A is used instead of the map 170B. Further, in the case where the ambient temperature Ta and the gas temperature Td are equal to each other, the pressure rise rate Prr determined by the map 170A tends to be higher than the pressure rise rate Prr determined by the map 170B. That is, in the case where the remaining gas amount in the gas tank 50 before the filling of the fuel gas is small, the pressure rise rate Prr tends to be high.

Based on the tank internal pressure Pt in the gas tank 50 before the filling of the fuel gas, the determination unit 152 selects one map 170 from among the plurality of maps 170. The determination unit 152 determines the adjustment target temperature Tc corresponding to the selected map 170.

The temperature control unit 154 calculates a temperature set as the set temperature Tx of the refrigerator of the temperature adjustment unit 30 based on the adjustment target temperature Tc determined by the determination unit 152. The temperature control unit 154 controls the temperature adjustment unit 30 to set the set temperature Tx of the refrigerator to the temperature calculated based on the adjustment target temperature Tc. By setting the set temperature Tx of the refrigerator, the gas temperature Td of the fuel gas can approach the adjustment target temperature Tc. This can suppress temperature separation of the fuel gas in the gas tank 50 during the filling of the fuel gas. Therefore, the tank internal temperature Tt is less likely to exceed the temperature threshold Th.

As described above, the adjustment target temperature Tc to be determined varies depending on the map 170. For example, the adjustment target temperatures Tc corresponding to the respective maps 170 are different from each other between the map 170A and the map 170B shown in FIG. 4.

In this instance, the adjustment target temperature Tc corresponding to the map 170B in the case where the remaining gas amount in the gas tank 50 is equal to or greater than a predetermined amount is referred to as a first target temperature T1. In the case where the remaining gas amount in the gas tank 50 is equal to or greater than the predetermined amount, the tank internal pressure Pt in the gas tank 50 is equal to or greater than the predetermined value Pt0. The adjustment target temperature Tc corresponding to the map 170A in the case where the remaining gas amount in the gas tank 50 is less than the predetermined amount is referred to as a second target temperature T2. In the case where the remaining gas amount in the gas tank 50 is less than the predetermined amount, the tank internal pressure Pt in the gas tank 50 is less than the predetermined value Pt0.

As described above, in the case where the remaining gas amount in the gas tank 50 is small, temperature separation of the fuel gas in the gas tank 50 is likely to occur in the process of filling the gas tank 50 with the fuel gas. It is necessary that this temperature separation is eliminated by the stirring action of the fuel gas during the filling of the fuel gas, and that the tank internal temperature Tt does not exceed the temperature threshold Th. Therefore, a low adjustment target temperature Tc is determined. That is, the second target temperature T2 is lower than the first target temperature T1. This can suppress temperature separation of the fuel gas in the gas tank 50.

There is a case where the gas temperature Td of the fuel gas at the time when the temperature adjustment of the gas temperature Td is started by the temperature adjustment unit 30 is different from the adjustment target temperature Tc. In this case, a delay time Lt is required from the time when the temperature adjustment is started until the gas temperature Td reaches the adjustment target temperature Tc.

Before each moving object 16 is connected to the fuel gas filling device 14, the gas temperature Td of the fuel gas adjusted by the temperature adjustment unit 30 is set to a standby temperature determined in advance. The standby temperature is preferably the adjustment target temperature Tc among the first target temperature T1 and the second target temperature T2. The remaining amount of the fuel gas in the gas tank 50 of each moving object 16 to be filled with the fuel gas is not known until the moving object 16 is connected to the fuel gas filling device 14. The following first setting and second setting are conceivable for the setting of the standby temperature, which is the gas temperature Td of the fuel gas in a standby state in which the moving object 16 is not connected to the fuel gas filling device 14.

As described above, temperature separation of the fuel gas in the gas tank 50 is likely to occur during the filling of the fuel gas into the moving object 16 having a small remaining gas amount. Therefore, in the first setting, the standby temperature, which is the gas temperature Td of the fuel gas in the standby state, is set to the adjustment target temperature Tc, which is relatively low. In the example shown in FIG. 4, the standby temperature is set to the above-described second target temperature T2 corresponding to the map 170A. It is assumed that the moving object 16 is connected to the fuel gas filling device 14 in this state.

In the case where the remaining gas amount in the connected moving object 16 is large, the above-described delay time Lt occurs. However, as described above, in the case where the remaining gas amount is large, temperature separation of the fuel gas in the gas tank 50 is less likely to occur. It should be noted that the time required to fill the gas tank 50 with the fuel gas is relatively short, such as about several minutes or 10 minutes at the longest.

It is considered that many moving objects 16 are connected to the fuel gas filling device 14 for the purpose of being filled with the fuel gas before the remaining gas amount becomes small. In this case, the energy loss is large if the standby temperature of the fuel gas in the standby state is maintained at the second target temperature T2, which is the relatively low adjustment target temperature Tc.

Therefore, in the second setting, the standby temperature, which is the gas temperature Td of the fuel gas in the standby state, is set to the adjustment target temperature Tc, which is relatively high, by the determination unit 152. In the example shown in FIG. 4, the standby temperature is set to the above-described first target temperature T1 corresponding to the map 170B by the determination unit 152. It is assumed that the moving object 16 is connected to the fuel gas filling device 14 in this state.

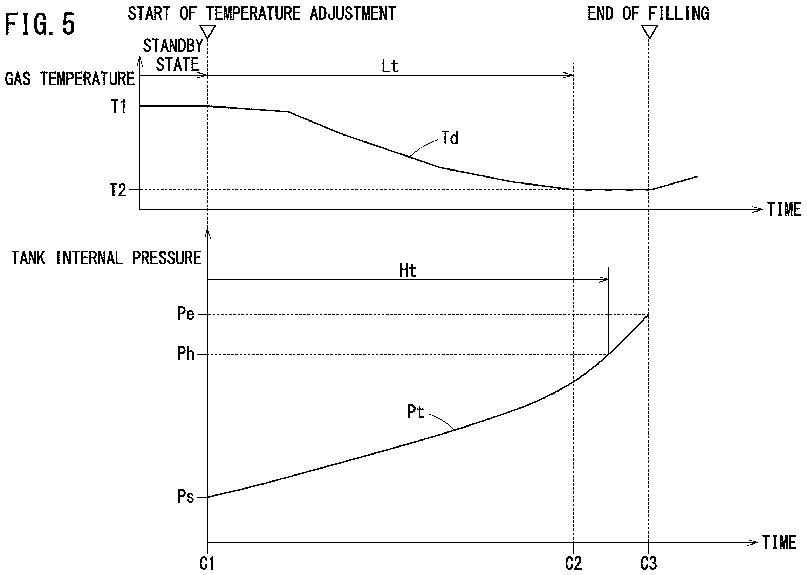

In the case where the remaining gas amount in the connected moving object 16 is small, the above-described delay time Lt occurs. However, if the delay time Lt is within a predetermined time period, temperature separation of the fuel gas in the gas tank 50 is less likely to occur. This feature will be described in detail with reference to FIG. 5.

FIG. 5 is a diagram illustrating the delay time Lt in the temperature adjustment of the fuel gas and changes in the gas temperature Td and the tank internal pressure Pt. The standby temperature, which is the gas temperature Td of the fuel gas in the standby state in which the moving object 16 is not connected to the fuel gas filling device 14, is set to the first target temperature T1. FIG. 5 shows an example of a case where the remaining gas amount in the moving object 16 connected to the fuel gas filling device 14 after the standby state is small. When the moving object 16 is connected, the temperature adjustment unit 30 starts adjusting the gas temperature Td of the fuel gas at a time C1.

The gas temperature Td starts to decrease from the time C1, which is a time when the temperature adjustment is started, and the gas temperature Td reaches the second target temperature T2 at a time C2 after the delay time Lt has elapsed from the time C1. Thereafter, the gas temperature Td is maintained at the second target temperature T2 until the filling of the gas tank 50 of the moving object 16 with the fuel gas is completed at a time C3. After the time C3, the temperature of the fuel gas is adjusted by the temperature adjustment unit 30, and the gas temperature Td starts to rise toward the first target temperature T1, which is the standby temperature.

In the example shown in FIG. 5, at the time C1, the temperature adjustment unit 30 starts adjusting the gas temperature Td of the fuel gas, and the filling unit 48 starts filling the gas tank 50 of the moving object 16 with the fuel gas. This makes it possible to reduce the length of the time for filling the gas tank 50 with the fuel gas while taking into account the delay time Lt until the gas temperature Td reaches the adjustment target temperature Tc.

Note that the filling unit 48 may start filling the gas tank 50 with the fuel gas after the temperature adjustment unit 30 starts adjusting the gas temperature Td. This makes it possible to reduce the length of the time for filling the gas tank 50 with the fuel gas even in the case where the delay time Lt is long. Further, the filling unit 48 may start filling the gas tank 50 with the fuel gas before the temperature adjustment unit 30 starts adjusting the gas temperature Td. This makes it possible to reduce the length of the time for filling the gas tank 50 with the fuel gas even in the case where the capacity of the gas tank 50 is large.

As described above, in the present embodiment, filling of the fuel gas is started at the time C1. As described above, the flow rate of the fuel gas to be filled is adjusted based on the map 170 in which the pressure rise rate Prr is determined according to the gas temperature Td and the ambient temperature Ta. During the filling of the fuel gas performed in a relatively short time, the ambient temperature Ta does not substantially change, but the gas temperature Td continues to decrease from the time C1 to the time C2 as described above. According to the map 170, the pressure rise rate Prr increases as the gas temperature Td decreases as described above. Therefore, the pressure rise rate Prr gradually increases.

As shown in FIG. 5, the tank internal pressure Pt in the gas tank 50 starts to increase from a pressure value Ps at the beginning of filling at the time C1. Since the pressure rise rate Prr represented by the slope of the tank internal pressure Pt also increases, the slope of the tank internal pressure Pt at the time C2 is greater than the slope of the tank internal pressure Pt at the time C1. Since the pressure rise rate Prr is constant from the time C2 to the time C3, the tank internal pressure Pt increases with the constant slope. At the time C3, the tank internal pressure Pt reaches a value Pe, which indicates that the gas tank 50 is fully filled with the fuel gas.

As shown in FIG. 5, the pressure rise rate Prr increases as the gas temperature Td decreases. Temperature separation of the fuel gas in the gas tank 50 starts to occur after the remaining amount of the fuel gas in the gas tank 50 increases by a certain amount. Therefore, if the delay time Lt is within a predetermined time period Ht from the time C1, which is a time when the temperature adjustment is started, to the time when the increasing tank internal pressure Pt reaches a predetermined pressure Ph, the above-described temperature separation is less likely to occur. That is, the temperature adjustment unit 30 having a cooling capacity that allows the delay time Lt to be within the predetermined time period Ht may be used.

Therefore, the above-described energy loss can be suppressed by using the second setting among the first setting and the second setting described above relating to the setting of the standby temperature in the standby state.

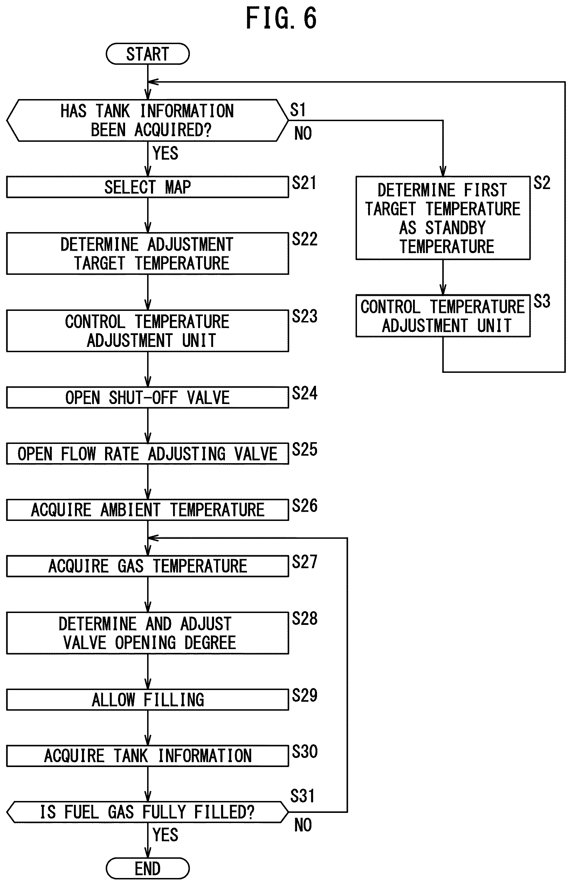

FIG. 6 is a flowchart showing a processing procedure according to a fuel gas filling method. This processing procedure is performed by, for example, the control ECU 22 of the fuel gas filling device 14. This processing procedure is started every time the filling of the fuel gas into the moving object 16 is ended. When this processing procedure is started, then in step S1, the tank information acquisition unit 140 determines whether or not information about the tank internal pressure Pt has been acquired as tank information relating to the remaining gas amount in the gas tank 50 of the moving object 16.

In the case where the moving object 16 is connected to the fuel gas filling device 14, the information about the tank internal pressure Pt is acquired from the communication device 38, and therefore, it is determined YES in step S1. In the case of a standby state in which the moving object 16 is not connected to the fuel gas filling device 14, it is determined NO in step S1. In the case where it is determined YES in step S1, this processing procedure proceeds to step S21. In the case where it is determined NO in step S1, this processing procedure proceeds to step S2.

In step S2, the determination unit 152 determines the first target temperature T1 as the standby temperature, which is the gas temperature Td of the fuel gas in the standby state. In step S3, the temperature control unit 154 controls the temperature adjustment unit 30 to set the set temperature Tx of the refrigerator of the temperature adjustment unit 30 to a temperature corresponding to the first target temperature T1. As a result, the gas temperature Td is adjusted to approach the first target temperature T1. When the process of step S3 is completed, this processing procedure returns to step S1.

In step S21, the determination unit 152 selects one map 170 according to the information about the tank internal pressure Pt acquired in step S1. In step S22, the determination unit 152 determines the first target temperature T1 or the second target temperature T2 as the adjustment target temperature Tc according to the map 170 selected in step S21.

In step S23, the temperature control unit 154 controls the temperature adjustment unit 30 to set the set temperature Tx of the refrigerator of the temperature adjustment unit 30 to a temperature corresponding to the adjustment target temperature Tc. As a result, the gas temperature Td is adjusted to approach the adjustment target temperature Tc. In step S24, the filling control unit 156 opens the shut-off valve 24, and in step S25, the filling control unit 156 opens the flow rate adjusting valve 28.

In step S26, the ambient temperature acquisition unit 150 acquires the outside ambient temperature Ta from the ambient temperature sensor 42. Since the ambient temperature Ta does not substantially change during the filling of the fuel gas, it is sufficient that the process of step S26 is performed before the filling of the fuel gas, but this process may be performed again during the filling of the fuel gas. In step S27, the gas temperature acquisition unit 148 acquires, from the gas temperature sensor 36, the gas temperature Td of the fuel gas delivered from the accumulator 20 to the pipe 100.

In step S28, the filling control unit 156 determines the opening degree of the flow rate adjusting valve 28 based on the ambient temperature Ta acquired in step S26, the gas temperature Td acquired in step S27, and the map 170 selected in step S21. The filling control unit 156 adjusts the opening degree of the flow rate adjusting valve 28 to the determined opening degree. In step S29, the filling control unit 156 controls the filling unit 48 to allow the filling unit 48 to fill the gas tank 50 of the moving object 16 with the fuel gas. By operating the filling unit 48, the nozzle 48a of the filling unit 48 is fitted into the receptacle 54 of the moving object 16, and the gas tank 50 is filled with the fuel gas.

In step S30, the tank information acquisition unit 140 acquires information about the tank internal pressure Pt from the communication device 38. In step S31, the tank information acquisition unit 140 determines whether or not the tank internal pressure Pt has reached the value Pe, which indicates that the gas tank 50 is fully filled with the fuel gas. In the case where the tank internal pressure Pt has reached the value Pe, the tank information acquisition unit 140 determines that the gas tank 50 is fully filled with the fuel gas. In this case, it is determined YES in step S31. In the case where it is determined Yes in step S31, this processing procedure is ended. In the case where it is determined NO in step S31, this processing procedure returns to step S27.

The following supplementary notes are further disclosed in relation to the above-described disclosure.

### (Supplementary Note 1)

The fuel gas filling device (14) includes: the filling unit (48) configured to fill the gas tank (50) of the moving object (16) with a fuel gas; the tank information acquisition unit (140) configured to acquire the tank information relating to the remaining gas amount in the gas tank before the filling unit starts filling the gas tank with the fuel gas; the temperature adjustment unit (30) configured to adjust the gas temperature (Td) of the fuel gas that fills the gas tank, in a manner so that the gas temperature approaches the adjustment target temperature (Tc); and the determination unit (152) configured to determine the adjustment target temperature according to the tank information acquired by the tank information acquisition unit. According to such a configuration, temperature separation of the fuel gas in the gas tank during filling of the fuel gas can be suppressed.

### (Supplementary Note 2)

In the fuel gas filling device according to Supplementary Note 1, in the case where the tank information indicates that the remaining gas amount is equal to or greater than a predetermined amount, the determination unit may determine the first target temperature (T1) as the adjustment target temperature, and in the case where the tank information indicates that the remaining gas amount is smaller than the predetermined amount, the determination unit may determine, as the adjustment target temperature, the second target temperature (T2) lower than the first target temperature. According to such a configuration, temperature separation of the fuel gas in the gas tank during filling of the fuel gas can be suppressed.

### (Supplementary Note 3)

In the fuel gas filling device according to Supplementary Note 1, the filling unit may start filling the gas tank with the fuel gas when the temperature adjustment unit starts adjusting the gas temperature. According to such a configuration, it is possible to reduce the length of the time for filling the gas tank with the fuel gas while taking into account the delay time until the gas temperature reaches the adjustment target temperature.

### (Supplementary Note 4)

In the fuel gas filling device according to Supplementary Note 1, the filling unit may start filling the gas tank with the fuel gas before the temperature adjustment unit starts adjusting the gas temperature. According to such a configuration, it is possible to reduce the length of the time for filling the gas tank with the fuel gas even in the case where the capacity of the gas tank is large.

### (Supplementary Note 5)

In the fuel gas filling device according to Supplementary Note 1, the filling unit may start filling the gas tank with the fuel gas after the temperature adjustment unit starts adjusting the gas temperature. According to such a configuration, it is possible to reduce the length of the time for filling the gas tank with the fuel gas even in the case where the delay time until the gas temperature reaches the adjustment target temperature is long.

### (Supplementary Note 6)

The fuel gas filling device according to any one of Supplementary Notes 1 to 5 may further include: the gas temperature acquisition unit (148) configured to acquire information about the gas temperature; and the filling control unit (156) configured to change, according to the gas temperature, the pressure rise rate (Prr) per unit time of the tank internal pressure (Pt) in the gas tank that increases as the gas tank is filled with the fuel gas. According to such a configuration, temperature separation of the fuel gas in the gas tank during filling of the fuel gas can be suppressed.

### (Supplementary Note 7)

In the fuel gas filling device according to Supplementary Note 6, the pressure rise rate may increase as the gas temperature decreases. According to such a configuration, temperature separation of the fuel gas in the gas tank during filling of the fuel gas can be suppressed.

### (Supplementary Note 8)

In the fuel gas filling device according to Supplementary Note 6, the filling control unit may change the pressure rise rate by changing, according to the gas temperature, the gas flow rate of the fuel gas that fills the gas tank. According to such a configuration, the gas flow rate of the fuel gas that fills the gas tank can be easily changed according to the change in the gas temperature.

### (Supplementary Note 9)

The fuel gas filling device according to Supplementary Note 8 may further include the map (170) in which the pressure rise rate is determined in advance according to the gas temperature, the map being provided according to the tank information, wherein the determination unit may select the map according to the tank information and determine the adjustment target temperature according to the selected map, and the filling control unit may change the gas flow rate based on the gas temperature and the map selected by the determination unit. According to this configuration, the gas tank can be easily filled with the fuel gas.

### (Supplementary Note 10)

In the fuel gas filling device according to Supplementary Note 6, the tank information acquired by the tank information acquisition unit may indicate the tank internal pressure corresponding to the remaining gas amount. According to such a configuration, the remaining gas amount in the gas tank can be easily detected.

It should be noted that the present invention is not limited to the above disclosure, and various modifications are possible without departing from the essence and gist of the present invention.

### REFERENCE SIGNS LIST

14: fuel gas filling device
16: moving object
20: accumulator
22: control ECU
24: shut-off valve
28: flow rate adjusting valve
30: temperature adjustment unit
36: gas temperature sensor
38, 58: communication device
42: ambient temperature sensor
46: delivery pipe
48: filling unit
50: gas tank
52: communication ECU
54: receptacle
56: introduction pipe
62: check valve
64: tank internal temperature sensor
66: tank information sensor
100: pipe
120: computation unit
122: storage unit
140: tank information acquisition unit
142: tank internal temperature acquisition unit
148: gas temperature acquisition unit
150: ambient temperature acquisition unit
152: determination unit
154: temperature control unit
156: filling control unit
170: map

## Claims

1. A fuel gas filling device (14) comprising:
a filling unit (48) configured to fill a gas tank (50) of a moving object (16) with a fuel gas;
a tank information acquisition unit (140) configured to acquire tank information relating to a remaining gas amount in the gas tank before the filling unit starts filling the gas tank with the fuel gas;
a temperature adjustment unit (30) configured to adjust a gas temperature (Td) of the fuel gas that fills the gas tank, in a manner so that the gas temperature approaches an adjustment target temperature (Tc); and
a determination unit (152) configured to determine the adjustment target temperature according to the tank information acquired by the tank information acquisition unit.

2. The fuel gas filling device according to claim 1, wherein
in a case where the tank information indicates that the remaining gas amount is equal to or greater than a predetermined amount, the determination unit determines a first target temperature (T1) as the adjustment target temperature, and
in a case where the tank information indicates that the remaining gas amount is less than the predetermined amount, the determination unit determines, as the adjustment target temperature, a second target temperature (T2) lower than the first target temperature.

3. The fuel gas filling device according to claim 1, wherein
the filling unit starts filling the gas tank with the fuel gas when the temperature adjustment unit starts adjusting the gas temperature.

4. The fuel gas filling device according to claim 1, wherein
the filling unit starts filling the gas tank with the fuel gas before the temperature adjustment unit starts adjusting the gas temperature.

5. The fuel gas filling device according to claim 1, wherein
the filling unit starts filling the gas tank with the fuel gas after the temperature adjustment unit starts adjusting the gas temperature.

6. The fuel gas filling device according to any one of claims 1 to 5, further comprising:
a gas temperature acquisition unit (148) configured to acquire information about the gas temperature; and
a filling control unit (156) configured to change, according to the gas temperature, a pressure rise rate (Prr) per unit time of a tank internal pressure (Pt) in the gas tank that increases as the gas tank is filled with the fuel gas.

7. The fuel gas filling device according to claim 6, wherein
the pressure rise rate increases as the gas temperature decreases.

8. The fuel gas filling device according to claim 6, wherein
the filling control unit changes the pressure rise rate by changing, according to the gas temperature, a gas flow rate of the fuel gas that fills the gas tank.

9. The fuel gas filling device according to claim 8, further comprising a map (170) in which the pressure rise rate is determined in advance according to the gas temperature, the map being provided according to the tank information, wherein
the determination unit selects the map according to the tank information and determines the adjustment target temperature according to the map that has been selected, and
the filling control unit changes the gas flow rate based on the gas temperature and the map selected by the determination unit.

10. The fuel gas filling device according to claim 6, wherein
the tank information acquired by the tank information acquisition unit indicates the tank internal pressure corresponding to the remaining gas amount.
